# EUROPÄISCHE PATENTSCHRIFT

(11) **EP 1 831 517 B1**
(45) Veröffentlichungstag und Bekanntmachung des Hinweises auf die Patenterteilung: **27.08.2008**
(21) Anmeldenummer: 05850330.1
(22) Anmeldetag: 22.12.2005
(51) Int. Cl.: F02B 71/04, F16C 32/06, F04B 35/00, F04B 53/00

(54) **AXIAL ANGETRIEBENE KOLBEN-ZYLINDER-EINHEIT**
AXIALLY DRIVEN PISTON/CYLINDER UNIT
UNITE PISTON-CYLINDRE A ENTRAINEMENT AXIAL

(30) Priorität: 22.12.2004 DE 102004061941
(43) Veröffentlichungstag der Anmeldung: 12.09.2007
(73) Patentinhaber: AeroLas GmbH Aerostatische Lager-Lasertechnik, 82008 Unterhaching (DE); BSH Bosch und Siemens Hausgeräte GmbH, 81739 München (DE)
(72) Erfinder: SLOTTA, Georg, 81737 München (DE); MUTH, Michael, 81737 München (DE)
(86) Internationale Anmeldenummer: PCT/EP2005/013865
(87) Internationale Veröffentlichungsnummer: WO 2006/069731

(56) Entgegenhaltungen:
- US-A- 5 140 905
- US-A- 5 525 845

## Beschreibung

Die Erfindung betrifft eine axial angetriebene Kolben-Zylinder-Einheit mit den Merkmalen des Oberbegriffs des Patentanspruchs 1.

Eine derartige Kolben-Zylinder-Einheit ist durch die US 5,525,845 bekannt. Diese bekannte Kolben-Zylinder-Einheit umfaßt einen von einem Linearantrieb angetriebenen Kolben, wobei der Kolben mit dem Linearantrieb über eine Kolbenstange verbunden ist. Diese Kolbenstange ist in Axialrichtung steif und in Lateralrichtung, also in Radialrichtung, biegeweich. Durch diese Auslegung der Kolbenstange soll erreicht werden, daß der Kolben auch dann reibungsfrei im Luftlager des Zylinders geführt wird, wenn die Antriebsachse nicht parallel zur Zylinderachse verläuft. Diese unspezifische biegeweiche Auslegung der Kolbenstange kann jedoch dazu führen, daß Querkräfte auf den Kolben einwirken, die ein Verkippen des Kolbens im Zylinder oder einen seitlichen Versatz der Kolbenachse gegenüber der Zylinderachse hervorrufen. Dies führt zu Asymmetrien im Lagerspalt zwischen dem Kolbenaußenumfang und dem Zylinderinnenumfang, so daß das Fluidlager in dem Bereich, in dem der Abstand zwischen dem Kolbenaußenumfang und dem Zylinderinnenumfang größer wird, geschwächt wird, indem der Druck des Lagerfluids an dieser Stelle absinkt. Dieser absinkende Druck ermöglicht es jedoch, dem im Zylindervolumen komprimierten Fluid, sobald dessen Druck höher wird, in den Lagerspalt an dieser geschwächten Stelle einzudringen und hier den Lagerspalt weiter aufzuweiten bis es schließlich an der radial gegenübergelegen Stelle des Kolbens zu einer Anlage des Kolbens an die Zylinderwandlung und somit zu unerwünschter Reibung kommt.

Aufgabe der vorliegenden Erfindung ist es, eine gattungsgemäße Kolben-Zylinder-Einheit so weiterzubilden, daß auch bei einem lateralen Versatz zwischen der Antriebsachse und der Kolbenachse oder bei einer Neigung dieser beiden Achsen zueinander eine zuverlässige Funktion des Fluidlagers und damit eine zuverlässige Führung des Kolbens im Zylinder gewährleistet ist.

Diese Aufgabe wird durch die im kennzeichnenden Teil des Patentanspuchs 1 angegebenen Merkmale gelöst.

Durch das Vorsehen der beiden Gelenkabschnitte in der Kolbenstange wird zunächst dafür gesorgt, daß die Kolbenstange an definierten Orten die erforderliche Biegeweichheit erhält, um einen seitlichen Versatz der Achsen ausgleichen zu können. Durch die erfindungsgemäße Anordnung des kolbenseitigen Gelenks der Kolbenstange im hinteren, vom Kolbenboden abgewandten Bereich des Kolbens werden auf den Kolben einwirkende Querkräfte im hinteren Kolbenbereich radial vom Fluidlager abgestützt und somit weit entfernt vom vorderen, kolbenbodenseidigen Umfangsrand des Kolbens, so daß das Fluidlager in diesem vorderen Kolbenbereich nicht oder nicht wesentlich von diesen schädlichen Querkräften beeinflußt wird. Die Gefahr, daß der Kolben bei der erfinderischen Kolben-Zylinder-Einheit auf Grund von durch die Kolbenstange in den Kolben eingeleiteten Querkräften in seinem vorderen, kolbenbodenseidigen Bereich einen Lateralversatz erfährt, der im Stand der Technik zu der schädlichen Schwächung des Fluidlagers führt, ist bei der erfindungsgemäßen Kolben-Zylinder-Einheit nahezu ausgeschlossen.

Vorzugsweise ist das zweite, kolbenseitige Gelenk in Richtung der Längsachse des Kolbens an einem Ort vorgesehen, der in Höhe des hinteren Bereichs der kolbenseitigen Lagerfläche liegt. Hierdurch wird gewährleistet, daß eventuell von der Kolbenstange in den Kolben eingeleitete Querkräfte an dieser Stelle unmittelbar in der kolbenseitigen Lagerfläche auf dem Fluidlager abgestützt werden.

Der jeweilige Gelenkabschnitt ist vorzugsweise zumindest um eine Achse schwenkbar. Vorteilhaft ist aber auch, wenn der jeweilige Gelenkabschnitt um zwei Achsen schwenkbar ist, die jeweils orthogonal zueinander stehen.

Eine besonders bevorzugte Ausführung umfaßt Gelenkabschnitte, die die Bewegbarkeit eines Kugelgelenks aufweisen. Hierdurch kann ohne besondere Ausrichtung des Kolbens in Umfangrichtung ein bezüglich der Radialrichtung beliebiger Versatz zwischen der Antriebsachse und der Zylinderachse aufgefangen werden.

Vorzugsweise weist die Fluidlagerung eine Mehrzahl von in der Innenumfangswand des Zylinders vorgesehenen Austriebsdüsen für das Fluid auf.

Dabei sind in einer besonders bevorzugten Ausführungsform die Austrittsdüsen so angeordnet, daß dann, wenn sich der Kolben in seiner zweiten Kolbenstellung befindet, erste Austrittsdüsen den bezüglich der Kolbenlängserstreckung vorderen Bereich der kolbenseidigen Lagerfläche und zweite Austrittsdüsen den bezüglich der Kolbenlängserstreckung im mittleren oder hinteren Bereich der kolbenseitigen Lagerfläche mit Druckfluid versorgen.

Sind dabei die Austrittsdüsen im vorderen und hinteren Bereich der kolbenseitigen Lagerfläche vorgesehen, so wird in der Kompressionsstellung des Kolbens eine besonders gleichmäßige Abstützung des Kolbens über dessen Längserstreckung erzielt. Es ist aber auch vorteilhaft, wenn die ersten Austrittsdüsen im vorderen Bereich und die zweiten Austrittsdüsen im mittleren Bereich der kolbenseitigen Lagerfläche vorgesehen sind, wodurch sich der Lagerschwerpunkt nach vorne, also zum Kolbenboden hin erstreckt. Dadurch wird im Bereich des vorderen Endes des Ringspalts zwischen Kolben und Zylinder, also zum Zylindervolumen hingewandt, ein höherer Druck im Fluidlager zwischen Kolben und Zylinder aufgebaut, der dem Kompressionsdruck im Zylindervolumen einen höheren Widerstand bietet und somit auch bei Einwirkung einer Querkraft auf den Kolben noch besser verhindert, daß komprimiertes Druckfluid aus dem Zylindervolumen in den Lagerspalt eindringt.

In einer weiteren optionalen Ausführungsform sind die Austrittsdüsen so angeordnet, daß dann, wenn sich der Kolben in seiner ersten Kolbenstellung befindet, die zweiten Austrittsdüsen den bezüglich der Kolbenlängserstreckung vorderen Bereich der kolbenseitigen Lagerfläche und dritte Austrittsdüsen den bezüglich der Kolbenlängserstreckung hinteren Bereich der kolbenseitigen Lagerfläche mit Druckfluid versorgen. Diese optional vorgesehenen dritten Austrittsdüsen im hinteren Bereich können eine verbesserte Abstützung des Kolbens in dessen zurückgezogener Lage insbesondere bei Einwirkung einer Querkraft bewirken.

Besonders bevorzugt ist es, wenn die Fluidlagerung von einem Gasdrucklager gebildet ist, wobei die Austrittsdüsen von Gasaustrittsdüsen gebildet sind; eine vorteilhafte und besonders bevorzugte Ausführungsform ist die eines Luftlagers.

Vorzugsweise bilden jeweils eine Mehrzahl von Austrittsdüsen Düsenanordnungen.

Die Düsenanordnungen sind bevorzugt in Axialrichtung der Kolben-Zylinder-Einheit voneinander beabstandet und vorzugsweise ringförmig um die Zylinderachse ausgebildet. Hierdurch wird ein besonders gleichmäßiges Fluid- oder Gaspolster zwischen dem Kolben und dem Zylinder aufgebaut.

Vorteilhaft zur Ausbildung eines besonders gleichmäßigen Fluid- oder Gaspolsters zwischen dem Kolben und dem Zylinder ist es auch, wenn jeder Düsenring eine Mehrzahl von in Umfangsrichtung gleichmäßig voneinander beabstandeten Austrittsdüsen aufweist.

Vorzugsweise sind die Austrittsdüsen von mittels eines energiereichen Strahls gebohrten Mikrolöchern gebildet, die weiter vorzugsweise kegelförmig ausgebildet sind, wobei deren engster Querschnitt an der Mündung in die zylinderseitige Lagerfläche gelegen ist. Die auf diese Weise erzeugten Mikrolöcher erzeugen ein Fluid- oder Gaspolster von hoher Gleichmäßigkeit und hoher Tragfähigkeit.

Bevorzugt werden diese Mikrolöcher mittels eines Laserstrahls gebohrt.

Wird das Druckfluid zur Versorgung der Austrittsdüsen von einem durch Kompression des Zylindervolumens erzeugten Fluidstrom abgeleitet, beispielsweise aus dem Auslaßkanal, so kann ein einfacher Aufbau der Kolben-Zylinder-Einheit erzielt werden und gleichzeitig kann dabei auf einen zusätzlichen Druckerzeuger für das Druckfluid zur Versorgung der Austrittsdüsen verzichtet werden, was zu einer kostengünstigen Herstellung einer derartigen Kolben-Zylinder-Einheit beiträgt.

Besonders bevorzugt wird diese Kolben-Zylinder-Einheit dann, wenn der Kolben zum hin- und herbewegenden Antrieb von einem beweglichen Teil eines Linearantriebs beaufschlagt ist.

Eine besonders hervorzuhebende und vorteilhafte Anwendung der erfindungsgemäßen Kolben-Zylinder-Einheit erfolgt in einem Kompressor zur Erzeugung eines Druckfluids, vorzugsweise in einem von einem Linearmotor angetriebenen Linearkompressor.

Die Erfindung wird nachfolgend anhand eines Beispiels unter Bezugnahme auf die Zeichnung näher erläutert; in dieser zeigt:
- **Fig. 1**: eine erfindungsgemäße Kolben-Zylinder-Einheit mit dem Kolben in seiner zurückgezogenen Position;
- **Fig. 2**: dieselbe Kolben-Zylinder-Einheit mit dem Kolben in der Nähe der Kompressionsstellung.

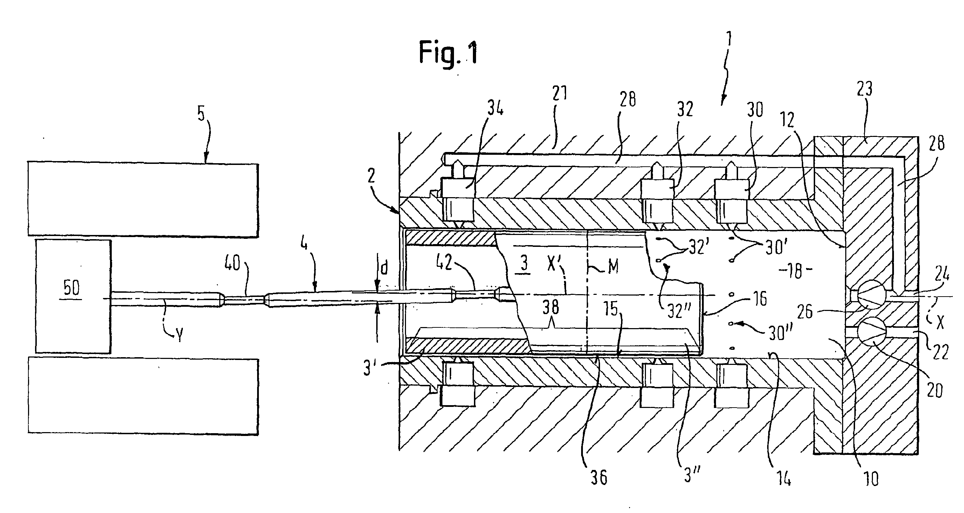

In Fig. 1 ist ein Längsschnitt durch eine Kolben-Zylinder-Einheit 1 mit einem Zylinder 2 und einem Kolben 3 gezeigt. Der Zylinder 2 ist mit einer Zylinderbohrung 10 versehen, in der der Kolben 3 in Richtung der Längsachse X der Zylinderbohrung 10 hin- und herbewegbar und frei geführt aufgenommen ist. Die an einem Zylinderkopf 23 ausgebildete kopfseitige Stirnwand 12 der Zylinderbohrung 10, die Innenumfangswand 14 der Zylinderbohrung 10 und der Kolbenboden 16 begrenzen das Zylindervolumen 18.

In die kopfseitige Stirnwand 12 der Zylinderbohrung 10 mündet ein mit einem schematisch gezeigten Ventil 20 versehener Einlaßkanal 22. Ebenfalls in der kopfseitigen Stirnwand 12 ist ein Auslaßkanal 24 vorgesehen, der ein entsprechendes Ventil 26 aufweist; auch dieser Auslaßkanal mündet in die Zylinderbohrung 10.

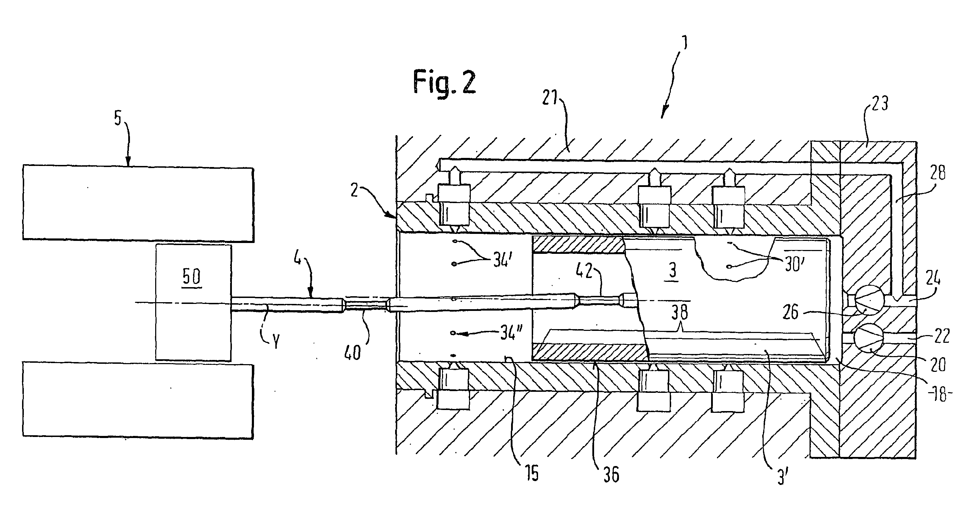

Bei einer Bewegung des Kolbens 3 in Fig. 2 nach links wird durch den Einlaßkanal 22 und das Einlaßventil 20 Fluid in den Zylinderraum 18 angesaugt und bei einer Bewegung des Kolbens 3 nach rechts wird dieses Fluid im komprimierten Zustand durch das Auslaßventil 26 und den Auslaßkanal 24 ausgestoßen. Die gezeigte Kolben-Zylinder-Einheit 1 ist Teil einer Kolbenarbeitsmaschine, bei der das ausgestoßene Fluid gasförmig ist, wie dies beispielsweise der Fall ist bei einem Kompressor. Die Erfindung ist grundsätzlich aber auch bei anderen Kolbenarbeitsmaschinen einsetzbar, wie beispielsweise bei Pumpen.

Ein Teil des ausgestoßenen gasförmigen Fluids wird aus dem Auslaßkanal 24 durch einen Verbindungskanal 28, der im Zylinderkopf 23 und im Gehäuse 21 des Zylinders 2 vorgesehen ist, in Ringkanäle 30, 32, 34 geleitet, die ebenfalls im Gehäuse 21 des Zylinders 2 vorgesehen sind und die die Zylinderbohrung 10 ringförmig umgeben. Die Ringkanäle 30, 32, 34 sind in Richtung der Längsachse X der Zylinderbohrung 10 voneinander beabstandet. Jeder der Ringkanäle 30, 32, 34 ist mit einer Vielzahl von Mikrolöchern 30', 32', 34' versehen, die über den Umfang der Zylinderbohrung 10 gleichmäßig verteilt den jeweiligen Ringkanal 30, 32, 34 mit dem Inneren der Zylinderbohrung 10 verbinden und dabei die Innenwand 14 des Zylinders durchdringen. Die Mikrolöcher 30', 32', 34' eines jeden Ringkanals 30, 32, 34 bilden so eine jeweilige ringförmige Düsenanordnung 30", 32", 34". Druckgas, welches durch den Verbindungskanal 28 in die Ringkanäle 30, 32, 34 geleitet wird, kann somit durch die Mikrolöcher 30', 32', 34' austreten und zwischen einer zylinderseitigen Lagerfläche 15 auf der Innenumfangswand 14 des Zylinders 2 und einer kolbenseitigen Lagerfläche 38 auf der Außenumfangswand 36 des Kolbens 3 ein den Kolben seitlich abstützendes Gaspolster ausbilden.

Der erste Ringkanal 30 mit den ihm zugeordneten Mikrolöchern 30' ist in einem Bereich gelegen, in dem der Kolben die Mikrolöcher 30' nur dann abdeckt, wenn er sich in der Nähe der Kompressionsstellung befindet, also dann, wenn das Zylindervolumen 18 minimiert ist, wie in Fig. 2 gezeigt ist. In diesem Fall deckt der Kolben 3 die vorderen, ersten Mikrolöcher 30' mit der Lagerfläche 38 im vorderen Bereich 3" ab.

In der in Fig. 1 gezeigten Stellung, in der das Zylindervolumen 18 maximal ist, tragen die Mikrolöcher 30' nicht zu der Bildung eines Gaspolsters zwischen der Innenumfangswand 14 des Zylinders 2 und der Außenumfangswand 36 des Kolbens bei. Aufgrund des äußerst geringen Querschnitts der Mikrolöcher 30' ist der so entstehende Druckverlust jedoch nicht gravierend. Es kann aber auch eine (nicht gezeigte) Ventilanordnung vorgesehen sein, die den ersten Ringkanal 30 nur dann mit Druckgas beaufschlagt, wenn der Kolben 3 die Mikrolöcher 30' abdeckt.

Der zweite Ringkanal 32 ist so angeordnet, daß die ihm zugeordneten Mikrolöcher 32' stets vom Kolben 3 abgedeckt sind, so daß die Mikrolöcher 32' über den gesamten axialen Bewegungsweg des Kolbens 3 zur Bildung des Gaspolsters zwischen der Innenumfangswand 14 des Zylinders 2 und der Außenumfangswand 36 des Kolbens 3 beitragen.

Der dritte Ringkanal 34 ist am weitesten von der kopfseitigen Stirnwand 12 der Zylinderbohrung 10 entfernt. Die dem dritten Ringkanal 34 zugeordneten Mikrolöcher 34' sind somit nur dann vom Kolben 3 überdeckt, und zwar von der Lagerfläche 38 im hinteren Bereich 3' des Kolbens, wenn sich der Kolben 3 im Bereich seiner zurückgezogenen Position befindet, in der das Zylindervolumen 18 maximal ist. Das Vorsehen des dritten Ringkanals 34 mit den ihm zugeordneten Mikrolöchern 34' ist optional und dient nur zur weiteren Verbesserung der Laufeigenschaften des Kolbens 3 in der Zylinderbohrung 10.

Zwischen den Ringkanälen 30, 32, 34 mit den ihnen zugeordneten Mikrolöchern 30', 32', 34', die jeweils die ringförmigen Düsenanordnungen 30", 32", 34" bilden, können weitere in gleicher Weise aufgebaute ringförmige Düsenanordnungen in der Innenwand 14 der Zylinderbohrung 10 vorgesehen sein.

Angetrieben wird der Kolben 3 von einem entlang einer Achse Y hin und her schwingenden längsbeweglichen Antriebselement 50 eines Linearantriebs 5, der in der Figur nur schematisch dargestellt ist. Das bewegliche Antriebselement 50 ist mit dem Kolben 3 über eine Kolbenstange 4 mechanisch verbunden. Die Kolbenstange 4 ist in Axialrichtung unelastisch und somit in der Lage, Axialkräfte vom Antriebselement 50 auf den Kolben 3 zu übertragen. Unproblematisch ist diese Kraftübertragung, wenn die Längsachse Y des Antriebselements 50 und die Längsachse X' des Kolbens 3 sowie die Längsachse X des Zylinders 2 identisch sind.

In dem Fall, in dem der Linearantrieb 5 nicht exakt zur Kolben-Zylinder-Einheit 1 ausgerichtet ist, kann die Längsachse Y des Antriebselements 50 zur Längsachse X des Zylinders 2 geneigt oder parallel versetzt sein. Dies führt dazu, daß auch die Achse X' des Kolbens 3 nicht exakt mit der Achse X des Zylinder 2 ausgerichtet ist, so daß im Stand der Technik der Kolben 3 im Zylinder 2 leicht schräg gestellt ist und somit eine Berührung zwischen Kolben und Zylinder erfolgt, die unter Umständen auch nicht vom Gasdrucklager abgestützt werden kann.

Aus diesem Grund ist die Kolbenstange 4 mit einem ersten antriebsseitigen Gelenkabschnitt 40 und einem zweiten kolbenseitigen Gelenkabschnitt 42 versehen. Diese Gelenkabschnitte 40, 42 sind im gezeigten Beispiel ausgeführt als Abschnitte mit einem gegenüber den restlichen Kolbenstangenabschnitten reduzierten Durchmesser. Die Kolbenstange 4 ist so in den Gelenkabschnitten 40, 42 biegeweicher als in den verbleibenden Kolbenstangenabschnitten, so daß sie sich in den Gelenkabschnitten 40, 42 verbiegen kann. Dadurch nimmt bei einer Fehlausrichtung der Achsen Y und X die Kolbenstange 4 den Winkelversatz dieser beiden Achsen zueinander oder den in den Figuren mit d bezeichneten lateralen Versatz dieser beiden Achsen zueinander auf, wodurch erreicht wird, daß die Längsachse X' des Kolbens 3 im wesentlichen mit der Achse X des Zylinders ausgerichtet ist. Dabei werden geringe Querkräfte in den Kolben eingeleitet, die im wesentlichen rechtwinklig zur Achse X' des Kolbens 3 wirken und von dem vom Gasdrucklager zwischen der zylinderseitigen Lagerfläche 15 und der kolbenseitigen Lagerfläche 38 gebildeten Gaspolster abgestützt werden können.

Der kolbenseitige Gelenkabschnitt 42 der Kolbenstange 4 ist im hinteren Bereich 3' des Kolbens 3 angeordnet. Der hintere Bereich ist dabei definiert als der bezüglich einer orthogonal auf der kolbenseitigen Lagerfläche 38 stehenden Mittelebene M vom Kolbenboden 16 abgewandte Bereich. Der vordere Kolbenbereich 3" ist dementsprechend jener Bereich zwischen der Mittelebene M und dem vorderen, kolbenbodenseitigen Ende des Kolbens 3.

Da die angesprochenen Lateralkräfte von der Kolbenstange 4 im Bereich des Gelenkabschnitts 42 orthogonal zur Kolbenlängsachse X' wirken, werden Sie von dem in diesem Bereich liegenden Abschnitt der kolbenseitigen Lagerfläche 38 gegen das Gaspolster und somit gegen die zylinderseitige Lagerfläche 15 abgestützt. Kommt es hierbei zu einer geringfügien Verformung des Gaspolsters, also des zwischen der kolbenseitigen Lagerfläche 38 und der zylinderseitigen Lagefläche 15 gebildeten Ringraums, so tritt diese Verformung im wesentlichen lokal im hinteren Bereich 3' des Kolbens 3 auf, ohne sich im vorderen Bereich 3" des Kolbens 3 wesentlich auszuwirken. Dadurch ist die Gefahr, daß aufgrund einer derartigen Verformung des ringförmigen Lagerspalts zwischen dem Kolben 3 und dem Zylinder 2 im vorderen Bereich 3" des Kolbens 3 Druckgas aus dem Zylindervolumen 80 in den Lagerspalt asymmetrisch eintreten und den Kolben dann zur Seite schieben oder zur Seite kippen kann, äußerst gering.

Die erfindungsgemäße Ausgestaltung der axial angetriebenen Kolben-Zylinder-Einheit ermöglicht durch die besondere Lage des kolbenseitigen Gelenkabschnitts 42 im hinteren Kolbenbereich 3' eine verbesserte Führung des Kolbens 3 im Zylinder 2 und führt zu einer höheren Betriebssicherheit. Die vordere, erste Düsenanordnung 30" unterstützt diese höhere Betriebssicherheit, indem sie das vom Fluidlager an dieser Stelle gebildete Gaspolster im komprimierten Zustand der Kolben-Zylinder-Einheit stärkt.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Axial angetriebene Kolben-Zylinder-Einheit mit
- einem Zylinder (2),
- einem Kolben (3), der zwischen einer ersten Kolbenstellung, in der das vom Kolben (3) und vom Zylinder (2) umschlossene Zylindervolumen (18) maximal ist, und einer zweiten Kolbenstellung, in der dieses Zylindervolumen minimal ist, in Axialrichtung des Zylinders (2) hin- und herbewegbar ist, sowie
- einer zwischen dem Kolben (3) und dem Zylinder (2) vorgesehenen Fluidlagerung, die den Kolben (3) im Zylinder (2) axial bewegbar lagert und die eine den Umfang des Kolbens (3) zumindest über einen Teil der Axialerstreckung des Kolbens (2) umgebende kolbenseitige Lagerfläche (38) bestimmt,
- einem in Axialrichtung des Zylinders oder im wesentlichen parallel dazu hin- und herbewegbaren Antriebselement (50), das mit dem Kolben (3) über eine Kolbenstange (4) mechanisch verbunden ist,
- wobei die Kolbenstange (4) so ausgestaltet ist, dass sie einen Radialversatz oder eine Neigung zwischen der Zylinderachse (X) und der die Bewegungsrichtung des Antriebselements (50) bestimmenden Längsachse (Y) zulässt, und kompensiert,
**dadurch gekennzeichnet, dass**
- die Kolbenstange (4) mit einem ersten, antriebsseitigen Gelenkabschnitt (40) versehen ist,
- die Kolbenstange (4) mit einem zweiten, kolbenseitigen Gelenkabschnitt (42) versehen ist, und
- der zweite, kolbenseitige Gelenkabschnitt (42) im hinteren, vom Kolbenboden (16) abgewandten Bereich der kolbenseitigen Lagerfläche (38) vorgesehen ist.

2. Axial angetriebene Kolben-Zylinder-Einheit nach Anspruch 1,
**dadurch gekennzeichnet**
**daß** der zweite, kolbenseitige Gelenkabschnitt (42) in Richtung der Längsachse (X') des Kolbens (3) an einem Ort vorgesehen ist, der in Höhe des hinteren Bereichs der kolbenseitigen Lagerfläche (38) liegt.

3. Axial angetriebene Kolben-Zylinder-Einheit nach Anspruch 1 oder 2,
**dadurch gekennzeichnet,**
**daß** der jeweilige Gelenkabschnitt (40, 42) um zumindest eine Achse schwenkbar ist.

4. Axial angetriebene Kolben-Zylinder-Einheit nach Anspruch 3,
**dadurch gekennzeichnet,**
**daß** der jeweilige Gelenkabschnitt (40, 42) um zwei Achsen schwenkbar ist, die jeweils orthogonal zueinander stehen.

5. Axial angetriebene Kolben-Zylinder-Einheit nach Anspruch 3 oder 4,
**dadurch gekennzeichnet,**
**daß** der jeweilige Gelenkabschnitt (40, 42) die Bewegbarkeit eines Kugelgelenks aufweist.

6. Axial angetriebene Kolben-Zylinder-Einheit nach einem der vorhergehenden Ansprüche,
**dadurch gekennzeichnet,**
**daß** die Fluidlagerung eine Mehrzahl von in der Innenumfangswand (14) des Zylinders (2) vorgesehenen Austrittsdüsen für das Fluid aufweist.

7. Axial angetriebene Kolben-Zylinder-Einheit nach einem der vorhergehenden Ansprüche,
**dadurch gekennzeichnet,**
**daß** die Austrittsdüsen (30', 32') so angeordnet sind, daß dann, wenn sich der Kolben in seiner zweiten Kolbenstellung befindet, erste Austrittsdüsen (30') den bezüglich der Kolbenlängserstreckung vorderen Bereich der kolbenseitige Lagerfläche (38) und zweite Austrittsdüsen (32') den bezüglich der Kolbenlängserstreckung mittleren oder hinteren Bereich der kolbenseitigen Lagerfläche (38) mit Druckfluid versorgen.

8. Axial angetriebene Kolben-Zylinder-Einheit nach einem der vorhergehenden Ansprüche,
**dadurch gekennzeichnet,**
**daß** die Austrittsdüsen (32', 34') so angeordnet sind, daß dann, wenn sich der Kolben in seiner ersten Kolbenstellung befindet, die zweiten Austrittsdüsen (32') den bezüglich der Kolbenlängserstreckung vorderen Bereich der kolbenseitigen Lagerfläche (38) und dritte Austrittsdüsen (34') den bezüglich der Kolbenlängserstreckung hinteren Bereich der kolbenseitigen Lagerfläche (38) mit Druckfluid versorgen.

9. Axial angetriebene Kolben-Zylinder-Einheit nach einem der vorhergehenden Ansprüche,
**dadurch gekennzeichnet,**
**daß** die Fluidlagerung von einem Gasdrucklager, vorzugsweise einem Luftlager, gebildet ist, wobei die Austrittsdüsen von Gasaustrittsdüsen (30', 32', 34') gebildet sind.

10. Axial angetriebene Kolben-Zylinder-Einheit nach einem der vorhergehenden Ansprüche,
**dadurch gekennzeichnet,**
**daß** jeweils eine Mehrzahl von Austrittsdüsen (30'; 32'; 34') Düsenanordnungen (30"; 32"; 34") bilden.

11. Axial angetriebene Kolben-Zylinder-Einheit nach Anspruch 10,
**dadurch gekennzeichnet,**
**daß** die Düsenanordnungen (30", 32", 34") in Axialrichtung der Kolben-Zylinder-Einheit (1) voneinander beabstandet sind und vorzugsweise ringförmig um die Zylinderachse (X) ausgebildet sind.

12. Axial angetriebene Kolben-Zylinder-Einheit nach Anspruch 10 oder 11,
**dadurch gekennzeichnet,**
**daß** jede Düsenanordnung (30", 32", 34") eine Mehrzahl von in Umfangsrichtung gleichmäßig voneinander beabstandeten Austrittsdüsen (30', 32', 34') aufweist.

13. Axial angetriebene Kolben-Zylinder-Einheit nach einem der vorhergehenden Ansprüche,
**dadurch gekennzeichnet,**
**daß** die Austrittsdüsen (30', 32', 34') von mittels eines energiereichen Strahls gebohrten Mikrolöchern gebildet sind, die vorzugsweise kegelförmig ausgebildet sind, wobei deren engster Querschnitt an der Mündung in die zylinderseitige Lagerfläche (15) gelegen ist.

14. Axial angetriebene Kolben-Zylinder-Einheit nach Anspruch 13,
**dadurch gekennzeichnet,**
**daß** die Mikrolöcher mittels eines Laserstrahls gebohrt sind.

15. Axial angetriebene Kolben-Zylinder-Einheit nach einem der vorhergehenden Ansprüche,
**dadurch gekennzeichnet,**
**daß** das Druckfluid zur Versorgung der Austrittsdüsen (30', 32', 34') von einem durch Kompression des Zylindervolumens (18) komprimierten Fluidstrom abgeleitet ist.

16. Axial angetriebene Kolben-Zylinder-Einheit nach einem der vorhergehenden Ansprüche,
**dadurch gekennzeichnet,**
**daß** der Kolben (3) zum hin- und herbewegenden Antrieb von einem beweglichen Antriebselement (50) eines Linearantriebs (5) beaufschlagt ist.

17. Kompressor zur Erzeugung eines Druckfluids mit zumindest einer axial angetriebenen Kolben-Zylinder-Einheit (1) nach einem der Ansprüche 1 bis 16.

## Claims

1. Axially driven piston-cylinder unit, comprising
- a cylinder (2),
- a piston (3), which is reciprocatingly movable in axial direction of the cylinder (2) between a first piston setting in which the cylinder volume (18) enclosed by the piston (3) and by the cylinder (2) is at a maximum and a second piston setting
in which this cylinder volume is at a minimum, as well as
- a fluid bearing, which is provided between the piston (3) and the cylinder (2) and which mounts the piston (3) in the cylinder (2) to be axially movable and determines the bearing surface (38) which is at the piston side and which surrounds the circumference of the piston (3) at least over a part of the axial length of the piston (2),
- a drive element (50) which is reciprocatingly movable in axial direction of the cylinder or substantially parallel thereto and which is mechanically connected with the piston (3) by way of a piston rod (4),
- wherein the piston rod (4) is so formed that it permits and provides compensation for a radial offset or an inclination between the cylinder axis (X) and the longitudinal axis (Y) determining the movement direction of the drive element (50),
**characterised in that**
- the piston rod (4) is provided with a first articulation section (40) at the drive side,
- the piston rod (4) is provided with a second articulation section (42) at the piston side and
- the second articulation section (42) at the piston side is provided in the rear region, which is remote from the piston base (16), of the bearing surface (38) at the piston side.

2. Axially driven piston-cylinder unit according to claim 1, **characterised in that** the second articulation section (42) at the piston side is provided in the direction of the longitudinal axis (X') of the piston (3) at a location lying at the level of the rear region of the bearing surface (38) at the piston side.

3. Axially driven piston-cylinder unit according to claim 1 or 2, **characterised in that** the respective articulation section (40, 42) is pivotable about at least one axis.

4. Axially driven piston-cylinder unit according to claim 3, **characterised in that** the respective articulation section (40, 42) is pivotable about two axes which are respectively orthogonal to one another.

5. Axially driven piston-cylinder unit according to claim 3 or 4, **characterised in that** the respective articulation section (40, 42) has the movability of a ball articulation.

6. Axially driven piston-cylinder unit according to any one of the preceding claims, **characterised in that** the fluid bearing has a plurality of outlet nozzles, which are provided in the inner circumferential wall (14) of the cylinder (2), for the fluid.

7. Axially driven piston-cylinder unit according to any one of the preceding claims, **characterised in that** the outlet nozzles (30', 32') are so arranged that when the piston is disposed in its second piston setting first outlet nozzles (30') supply the region, which is at the front with respect to the piston length, of the bearing surface (38) at the piston side with pressure fluid and second outlet nozzles (32') supply the region, which is in the middle or at the rear with respect to the piston length, of the bearing surface (38) at the piston side with pressure fluid.

8. Axially driven piston-cylinder unit according to any one of the preceding claims, **characterised in that** the outlet nozzles (32', 34') are so arranged that when the piston is disposed in its first piston setting the second outlet nozzles (32') supply the region, which is at the front with respect to the piston length, of the bearing surface (38) at the piston side with pressure fluid and third outlet nozzles (34') supply the region, which is at the rear with respect to the piston length, of the bearing surface (38) at the piston side with pressure fluid.

9. Axially driven piston-cylinder unit according to any one of the preceding claims, **characterised in that** the fluid bearing is formed by a gas pressure bearing, preferably an air bearing, wherein the outlet nozzles are formed by gas outlet nozzles (30', 32', 34').

10. Axially driven piston-cylinder unit according to any one of the preceding claims, **characterised in that** a respective plurality of outlet nozzles (30'; 32'; 34') form nozzle arrangements (30"; 32"; 34").

11. Axially driven piston-cylinder unit according to claim 10, **characterised in that** the nozzle arrangements (30", 32", 34") are spaced apart in axial direction of the piston-cylinder unit (1) and are preferably formed annularly about the cylinder axis (X).

12. Axially driven piston-cylinder unit according to claim 10 or 11, **characterised in that** each nozzle arrangement (30", 32", 34") comprises a plurality of outlet nozzles (30', 32', 34') uniformly spaced apart in circumferential direction.

13. Axially driven piston-cylinder unit according to any one of the preceding claims, **characterised in that** the outlet nozzles (30', 32', 34') are formed by micro-holes, which are drilled by means of a high-energy jet and which are preferably formed to be conical, wherein the narrowest cross-section thereof is disposed at the opening into the bearing surface (15) at the cylinder side.

14. Axially driven piston-cylinder unit according to claim 13, **characterised in that** the micro-holes are drilled by means of a laser beam.

15. Axially driven piston-cylinder unit according to any one of the preceding claims, **characterised in that** the pressure fluid for supply of the outlet nozzles (30', 32', 34') is derived from a fluid flow compressed by compression of the cylinder volume (18).

16. Axially driven piston-cylinder unit according to any one of the preceding claims, **characterised in that** the piston (3) is acted on for reciprocating drive by a movable drive element (50) of a linear drive (5).

17. Compressor for producing a pressure fluid with at least one axially driven piston-cylinder unit (1) according to any one of claims 1 to 16.

## Revendications

1. Unité piston-cylindre à entraînement axial, comprenant
- un cylindre (2),
- un piston (3) qui est déplaçable en va-et-vient en direction axiale du cylindre (2) entre une première position de piston, dans laquelle le volume du cylindre (18) enfermé par le piston (3) et par le cylindre (2) est maximal, et une seconde position de piston, dans laquelle ce volume de cylindre est minimal, ainsi que
- un logement de fluide ménagé entre le piston (3) et le cylindre (2), ce logement de fluide logeant le piston (3) dans le cylindre (2) de manière déplaçable axialement et déterminant une surface de palier, côté piston, entourant la circonférence du piston (3) au moins sur une partie de l'étendue axiale du piston (2),
- un élément d'entraînement (50) déplaçable en va-et-vient en direction axiale du cylindre ou essentiellement parallèlement à lui, cet élément d'entraînement étant raccordé mécaniquement au piston (3) par l'intermédiaire d'une tige de piston (4),
- la tige de piston (4) étant réalisée de manière à ce qu'elle permette un décalage radial ou une inclinaison entre l'axe du cylindre (X) et l'axe longitudinal (Y) déterminant le sens du mouvement de l'élément d'entraînement (50), et à ce qu'elle les compense,
**caractérisée en ce que**
- la tige de piston (4) est munie d'une première section articulée (40) côté entraînement,
- la tige de piston (4) est munie d'une seconde section articulée (42) côté piston, et
- la seconde section articulée (42) côté piston est ménagée dans la partie arrière, détournée du fond du piston (16), de la surface de palier (38) côté piston.

2. Unité piston-cylindre à entraînement axial selon la revendication 1,
**caractérisée en ce**
**que** la seconde section articulée (42) côté piston est ménagée en direction de l'axe longitudinal (X') du piston (3), à un endroit qui se situe à hauteur de la partie arrière de la surface de palier (38) côté piston.

3. Unité piston-cylindre à entraînement axial selon la revendication 1 ou 2,
**caractérisée en ce**
**que** la section articulée respective (40, 42) est orientable autour d'au moins un axe.

4. Unité piston-cylindre à entraînement axial selon la revendication 3,
**caractérisée en ce**
**que** la section articulée respective (40, 42) est orientable autour de deux axes situés respectivement de manière orthogonale l'un par rapport à l'autre.

5. Unité piston-cylindre à entraînement axial selon la revendication 3 ou 4,
**caractérisée en ce**
**que** la section articulée respective (40, 42) présente la mobilité d'un joint à rotule.

6. Unité piston-cylindre à entraînement axial selon l'une quelconque des revendications précédentes,
**caractérisée en ce**
**que** le logement de fluide présente une pluralité de buses de sortie pour le fluide, ménagées dans la paroi circonférentielle intérieure (14) du cylindre (2).

7. Unité piston-cylindre à entraînement axial selon l'une quelconque des revendications précédentes,
**caractérisée en ce**
**que** les buses de sortie (30', 32') sont disposées de manière à ce que, lorsque le piston se trouve dans sa seconde position de piston, des premières buses de sortie (30') alimentent en fluide sous pression la partie avant, par rapport à l'étendue longitudinale du piston, de la surface de palier (38) côté piston, et en ce que des deuxièmes buses de sortie (32') alimentent en fluide sous pression la partie centrale ou arrière, par rapport à l'étendue longitudinale du piston, de la surface de palier (38) côté piston.

8. Unité piston-cylindre à entraînement axial selon l'une quelconque des revendications précédentes,
**caractérisée en ce**
**que** les buses de sortie (32', 34') sont disposées de manière à ce que, lorsque le piston se trouve dans sa première position de piston, les deuxièmes buses de sortie (32') alimentent en fluide sous pression la partie avant, par rapport à l'étendue longitudinale du piston, de la surface de palier (38) côté piston, et en ce que des troisièmes buses de sortie (34') alimentent en fluide sous pression la partie arrière, par rapport à l'étendue longitudinale du piston, de la surface de palier (38) côté piston.

9. Unité piston-cylindre à entraînement axial selon l'une quelconque des revendications précédentes,
**caractérisée en ce**
**que** le logement de fluide est formé par un palier à pression gazeuse, de préférence un palier à air, les buses de sortie étant formées par des buses de sortie de gaz (30', 32', 34').

10. Unité piston-cylindre à entraînement axial selon l'une quelconque des revendications précédentes,
**caractérisée en ce**
**qu'**une pluralité de buses de sortie (30' ; 32' ; 34') forment respectivement des dispositifs de buse (30' ; 32' ; 34").

11. Unité piston-cylindre à entraînement axial selon la revendication 10,
**caractérisée en ce**
**que** les dispositifs de buse (30", 32", 34") sont distancés les uns des autres en direction axiale de l'unité piston-cylindre (1) et sont formés de préférence de manière annulaire autour de l'axe de cylindre (X).

12. Unité piston-cylindre à entraînement axial selon la revendication 10 ou 11,
**caractérisée en ce**
**que** chaque dispositif de buse (30", 32", 34") présente une pluralité de buses de sortie (30', 32', 34') distancées les unes des autres de manière régulière dans le sens circonférentiel.

13. Unité piston-cylindre à entraînement axial selon l'une des revendications précédentes,
**caractérisée en ce**
**que** les buses de sortie (30', 32', 34') sont formées par des micro-trous percés au moyen d'un jet à haute énergie, qui sont formés de préférence de manière conique, leur section la plus étroite étant située à l'embouchure dans la surface de palier (15) côté cylindre.

14. Unité piston-cylindre à entraînement axial selon la revendication 13,
**caractérisée en ce**
**que** les micro-trous sont percés au moyen d'un rayon laser.

15. Unité piston-cylindre à entraînement axial selon l'une quelconque des revendications précédentes,
**caractérisée en ce**
**que** le fluide sous pression, pour alimenter les buses de sortie (30', 32', 34'), est dévié par un courant de fluide comprimé par compression du volume du cylindre (18).

16. Unité piston-cylindre à entraînement axial selon l'une quelconque des revendications précédentes,
**caractérisée en ce**
**que** le piston (3) est actionné, pour l'entraînement en va-et-vient, par un élément d'entraînement mobile (50) d'un entraînement linéaire (5).

17. Compresseur destiné à générer un fluide sous pression à l'aide d'au moins une unité piston-cylindre (1) à entraînement axial selon l'une quelconque des revendications 1 à 16.
